# EUROPEAN PATENT APPLICATION

(11) **EP 4 636 374 A1**
(43) Date of publication of application: **22.10.2025**
(21) Application number: 25170250.2
(22) Date of filing: 14.04.2025
(51) Int. Cl.: G01M 3/00, F16L 55/26, F16L 55/34, G01M 3/38, G01M 5/00

(54) **SYSTEM AND METHOD FOR DEEP INSPECTION OF PIPES AND OTHER INSTALLATIONS INTENDED FOR THE TRANSPORT OF FLUIDS**

(30) Priority: 17.04.2024 IT 202400008713
(71) Applicant: Dini, Stefano Carlo Giorgio, 28041 Arona (NO) (IT)
(72) Inventor: Dini, Stefano Carlo Giorgio, 28041 Arona (NO) (IT)
(74) Representative: Ottazzo, Marco Francesco Agostino

(57) **Abstract**

A system for the deep inspection of a pipe (T) and/or another installation (C) intended for the transport of fluids is described. The system comprises a probe (10) which comprises a detection head (12), provided with a first sensor (20) for the collection of the data regarding the internal physical structure of the pipe (T) and/or installation (C), a rod (14), on which the detection head (12) is positioned, a local electronic control unit (16), which is provided with at least one second sensor (22) for the collection of the data regarding the geolocation of the pipe (T) and/or installation (C) and/or the surface environment, and at least one remote electronic control unit (18), which is capable of receiving, storing and processing the data coming from the first sensor (20) and the at least one second sensor (22). The first sensor (20) consists of at least one incremental scanning LIDAR sensor, which is configured to incrementally acquire three-dimensional data regarding the internal physical structure of the pipe (T) and/or the installation (C) and/or all the installations pertaining to the pipe (T), such as (but not limited to) chambers, connections, breakages, deformations, curves and planimetric-altimetric route. A method for the deep inspection of a pipe (T) and/or another installation (C) intended for the transport of fluids by using a probe (10) of the type illustrated above is also described.

## Description

The present invention relates to a system and a method for the deep inspection of pipes and other installations intended for the transport of fluids.

The use of particular video inspection probes that work according to the principle of the endoscope is known for collecting the physical and dimensional data of the basic installations of the gravity drainage water networks, such as the buried sewer pipes which branch off from the so-called inspection chambers. These probes usually comprise a rigid or flexible rod, on a distal end of which the so-called probe detection head, which comprises at least one image and/or video acquisition instrument, such as a video camera, is attached.

The probe detection head is inserted into the inspection chamber, through the respective manhole, and is operated from the outside by means of the proximal end of the rod of the probe. The probe detection head is then moved inside the pipe to acquire images and/or videos. At least one monitor on which the images and/or videos acquired by the probe detection head are displayed is usually provided at the proximal end of the rod of the probe. This particular type of video inspection probes is typically used to view the physical status of the pipes or other similar installations, for example to diagnose their wear condition, or to detect possible breakages, scales, leaks, and so on.

A typical drawback related to the use of video inspection probes is however due to the fact that in the pipes to be inspected, usually being pipes belonging to sewer systems, an irregular flow of black and/or grey water normally flows. Since the purpose of the video inspection probes is to detect images and/or videos of the fixed parts of the pipe, such as the internal walls thereof, the presence of an irregular flow of water inside the pipe can affect correct detection. It should also be noted that vapours and/or fumes can also develop inside a sewer pipe which can also affect correct detection of images and/or videos by video inspection probes equipped with traditional CCD recording optics. The optical recording of the pipes and chambers interiors is aimed solely at the critical analysis by a human operator. Therefore, the data of deformation, size, classification and quality of observation depend on the interpretation of the human eye through a 2D image of bright pixels.

Probes have therefore been provided for the inspection of pipes and other installations intended for the transport of fluids which comprise, on the respective detection head, at least one laser sensor which is also known as LIDAR (acronym for *"Laser Imaging Detection and Ranging*") instead of the video camera. A LIDAR sensor enables to obtain three-dimensional images of an object or a surface using a laser pulse, which operates through a point scan of the same object. The points are acquired by a special electronic device, whose function is to combine these points in an appropriate way to obtain a 3D model consisting of a three-dimensional point cloud. The three-dimensional point cloud forms a detailed representation of the object or the surface analysed by means of the LIDAR sensors.

The probes equipped with LIDAR sensors enable to obtain a digital and computer-based detection, which is more accurate than the optical imaging carried out by the probes equipped with video cameras, but they also have some drawbacks. A first drawback is due to the fact that the LIDAR sensors simultaneously and repeatedly acquire all the points of the object being scanned. This results in a particularly slow and cumbersome acquisition and storage of the data. Another drawback is due to the fact that the LIDAR sensors, similarly to what happens with the probes equipped with video cameras, also acquire data relating to objects that are not of interest or in any case "disturbing", such as water flowing inside the pipe to be inspected.

Document US 2008/068601 A1 discloses a system and a method for inspecting manholes (inspection chambers). The system comprises a sensor head moving mechanism for lowering the sensor head into the manhole. The sensor head contains a plurality of sensors that collect data inside the manhole. These sensors include digital cameras, ranged or rotational laser systems, sonar, point lasers, two-dimensional lasers, three-dimensional lasers, and radar. Incremental scanning LIDAR sensors are not mentioned.

The object of the present invention is, therefore, to provide a system and a method for the deep inspection of pipes and other installations intended for the transport of fluids which are able to solve the aforementioned drawbacks of the prior art in an extremely simple way, without requiring very large data files and hence in an economical and particularly functional way.

In detail, it is an object of the present invention to provide a unified system and a method for the deep inspection of pipes, other installations intended for the transport of fluids and related surface areas (for example the road with the drains for rainwater) which, while still based on the acquisition of data by means of LIDAR sensors, are faster in the acquisition of these data compared to systems equipped with known LIDAR sensors.

Another object of the present invention is to provide a system and a method for the deep inspection of pipes and other installations intended for the transport of fluids which are particularly efficient in detecting only the data of real interest, that is to say those concerning the physical structure of the pipe, thus excluding any data provided by "disturbing" objects (water splashing, or jetting, or turbulent flowing, fumes, etc.).

A further object of the present invention is to provide a system and a method for the deep inspection of pipes and other installations intended for the transport of fluids by means of which it is possible to obtain point cloud images with a very low computing weight (pre-settable on a scale ranging from 0 to 100), as well as to carry out data acquisition and calculation processes with simple programs suitable for computer systems with low computing power.

Yet another object of the present invention is to provide a system for the deep inspection of pipes and other installations intended for the transport of fluids which can be integrated on any wheeled or tracked, or floating, or flying televisual inspection vehicle, by simply adding a removable and replaceable charger equipped with digital memory and batteries. The televisual inspection device will be connected to the vehicles by means of simple brackets made in reverse engineering on the samples.

These objects according to the present invention will be achieved by providing a system and a method for the deep inspection of pipes and other installations intended for the transport of fluids as set forth in claim 1.

Further features of the invention are highlighted by the dependent claims, which are an integral part of the present description.

The features and advantages of a system and a method for the deep inspection of pipes and other installations intended for the transport of fluids according to the present invention will be clearer from the following exemplifying and non-limiting description, referring to the attached schematic drawings in which:
Figure 1 is a schematic view of the main components of the system for the deep inspection of pipes and other installations intended for the transport of fluids according to the present invention;
Figure 2 is a schematic view of a probe belonging to the system in Figure 1, shown in the use configuration;
Figure 3 is a schematic view of a probe belonging to the system in Figure 1, in which the main components of such probe are shown;
Figure 4 is a schematic view showing the main instruments mounted on the probe detection head in Figure 3;
Figure 5 shows an example of the use of the system and the method for the deep inspection of pipes and other installations intended for the transport of fluids according to the present invention, in particular for calculating the slope of a buried pipe;
Figures 6 and 7 show two different procedures for calculating the slope of a buried pipe using the system and the method according to the present invention;
Figure 8 is a schematic view of an alternative embodiment of the system for the deep inspection of pipes and other installations intended for the transport of fluids according to the present invention;
Figure 9 (9A-9C) is a block diagram showing three different automatic cascade procedures for creating a simplified image with a reduced computing weight, for the geometrization of the surfaces obtained from the original or reduced point cloud, with which the fluid dynamic visualization inside the pipe is created, and for the rotation of the data classified by the sensors within the point cloud;
Figure 10 is another block diagram showing how the images are processed;
Figure 11 is an example of a scaled and simplified image of a portion of the pipe before any data integration;

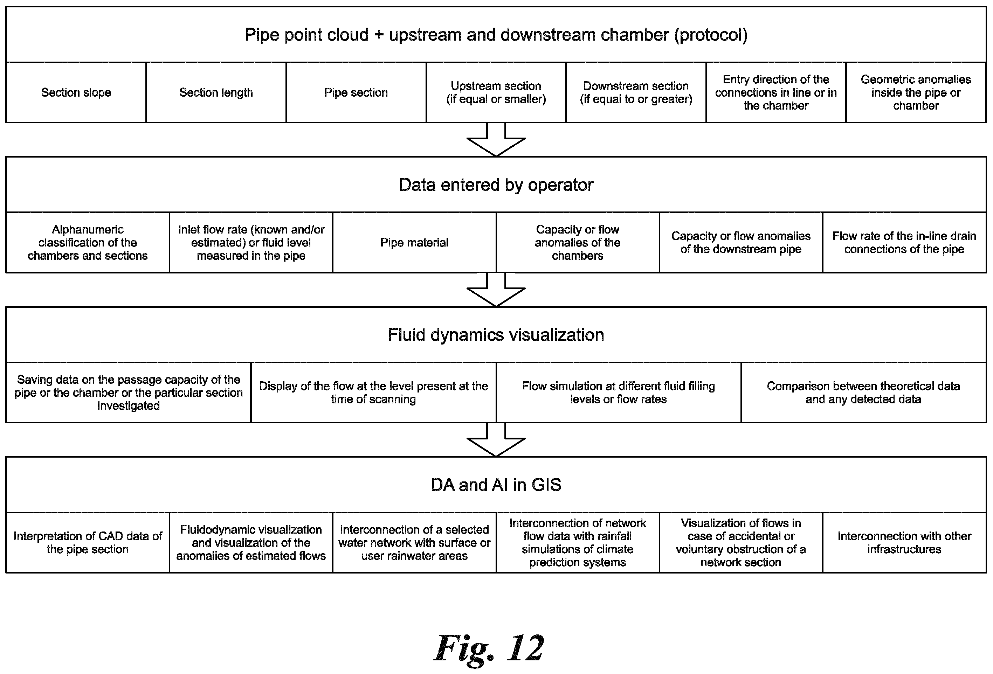

Figure 12 is a block diagram showing (not limited to) an example of the data flow required to obtain an inspection protocol, for the fluid dynamic visualization of a pipe section and for the interconnection with technologies for the analysis and visualization of information on the territory; and
Figure 13 is a block diagram showing the steps of collection processing and saving of the data coming from the system and the operator on-site.

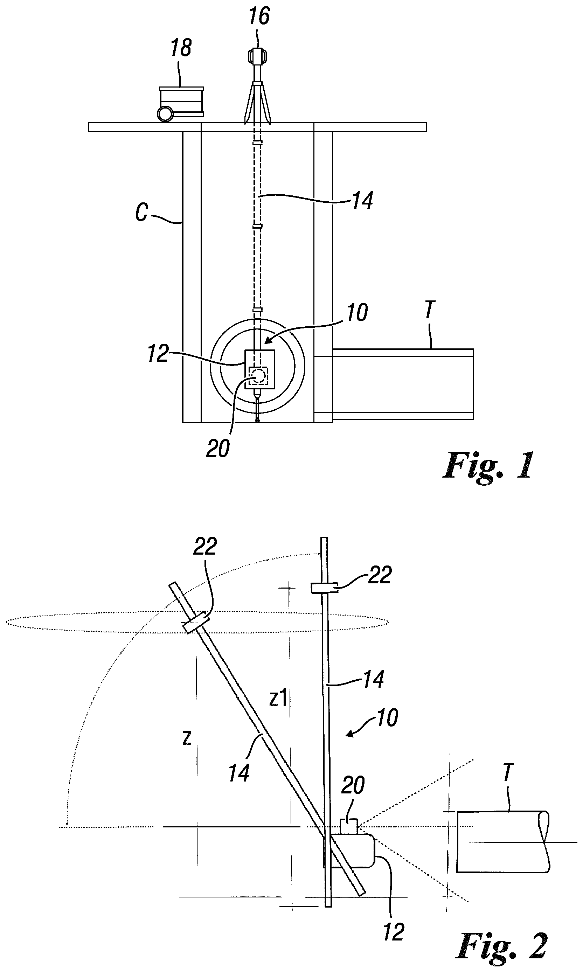

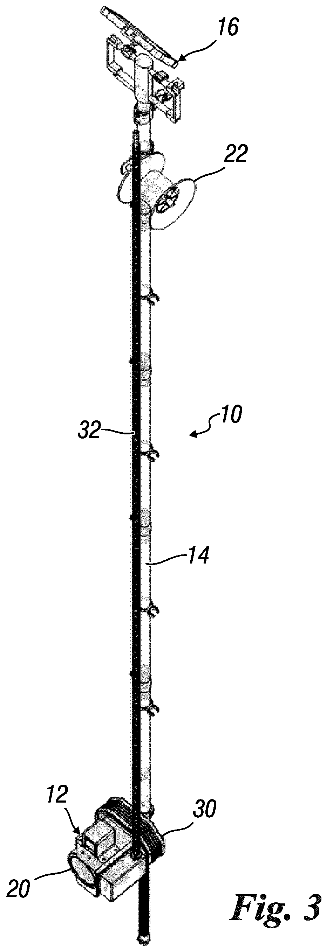

With particular reference to Figures 1 to 4, a preferred embodiment of the system for the deep inspection of pipes and other installations intended for the transport of fluids according to the present invention is shown. The system is designed to collect the physical and dimensional data, which already are in digital and computerized format, of the installations intended for the transport of fluids, such as the pipes of the gravity drainage water networks. These physical references can be used, for example, for the identification, localization and directional orientation of manholes, inspection chambers and underground pipes.

The system comprises at least one probe 10 which in turn comprises at least one detection head 12. The detection head 12 is designed to be positioned at and/or at least partially inside a pipe T which branches off, for example, from an inspection chamber C (Figure 1). The detection head 12 is provided with at least one first sensor 20 for the collection of the data regarding the internal physical structure of the pipe T and/or the inspection chamber C and/or all the installations pertaining to the pipe T, such as (but not limited to) connections, breakages, deformations, curves and planimetric-altimetric route.

The probe 10 further comprises at least one rigid or flexible extendable rod 14. The rod 14 can be of the telescopic type, extendable manually or by means of fluids or electric motors. Preferably, the rod 14 is particularly light and is substantially rigid to bending and twisting. The detection head 12 is positioned on a distal end of the rod 14, that is to say the end that is designed to be positioned underground and to be inserted inside the pipe T and/or the inspection chamber C.

The probe 10 further comprises at least one local electronic control unit 16, which is positioned on a proximal end of the rod 14, that is to say the opposite end with respect to the end on which the detection head 12 is positioned. This proximal end of the rod 14 is intended to remain outside the pipe T and/or the inspection chamber C and is meant to manoeuvre the detection head 12 below.

The local electronic control unit 16 is provided with at least one second sensor 22 for the collection of the data regarding the geolocation of the pipe T, the inspection chamber C and/or the surface environment near such installations. The local electronic control unit 16 is therefore configured to send command instructions to the first sensor 20 of the detection head 12 and to receive data from this first sensor 20.

The system also comprises at least one remote electronic control unit 18, which is capable of communicating with the local electronic control unit 16 via a predefined connection mode. The remote electronic control unit 18 is also capable of receiving, storing and processing the data coming from the first sensor 20 and the second sensor 22. It should be noted that the wording "remote electronic control unit" can mean both a physical server and a virtual server, such as a cloud server.

According to the invention, the first sensor 20 consists of at least one incremental scanning LIDAR sensor. The incremental scanning LIDAR sensor is configured to emit a sequential plurality of laser pulses, pointed to directions which are predefined and never superimposed. The incremental scanning LIDAR sensor is also configured to incrementally acquire the three-dimensional data, in the form of points, regarding the internal physical structure of the pipe T and/or the inspection chamber C. Each point is acquired one at a time, in a predefined linear sequence, and represents the three-dimensional position of a respective point-like physical portion of the pipe T and/or the inspection chamber C.

In particular, the incremental scanning LIDAR sensor can be preferably a conical or pyramidal incremental scanning LIDAR sensor, having a settable and/or selectable definition, so that it is possible to preset two survey areas: a general survey area, which is typical of the incremental scanning LIDAR sensors, from which a first 3D image file with uniform density of the points of the point cloud can be obtained, and a smaller survey area to automatically superimpose, in a single file, a second 3D image file concentrated in the desired survey area on the first 3D image file (for example a central survey area, to improve the survey of the pipe T in the prospectively most distant part). This type of LIDAR sensor is the most suitable sensor for medium and long-distance surveys inside the pipes T. Furthermore, this type of LIDAR sensor is not affected too much by the diameter of the pipe T.

Preferably, the detection head 12 can also comprise a plurality of further devices, in addition to the first sensor 20 consisting of the incremental scanning LIDAR sensor, including one or more video cameras 24 and/or one or more lighting devices 26, such as spotlights with diffused and/or deep light. The first sensor 20 and these further devices can be mounted on a structure 28 which is movable, rotating and/or tilting, relative to a fixed frame 30 of the detection head 12, namely a frame 30 integral with the rod 14.

The detection head 12 can be conveniently equipped with motorized means for the relative movement of the structure 28 movable relative to the fixed frame 30 of the detection head 12. These motorized means can consist for example of stepper motors, which have the advantage of allowing the micrometric movement of the movable structure 28, and therefore of all the instruments and devices mounted on it, with very precise values of angular displacement and rotation speed.

Again preferably, the second sensor 22, too, can comprise a plurality of different sensors, including one or more inertial measurement units (IMU), one or more GPS receivers, one or more gyroscopes, one or more inclinometers, one or more compasses, one or more distance/proximity sensors and/or one or more elevation sensors. The local electronic control unit 16 can also comprise a display for viewing and controlling the detection head 12, for example a tablet or a visually-controlled wearable device.

The remote electronic control unit 18 may, for example, be contained inside a self-propelled trolley, as shown in Figure 1, or may be part of the equipment of a van vehicle, which may also be used to transport the probe 10. The remote electronic control unit 18 and the local electronic control unit 16 can communicate with each other via cable, or via wireless systems (Wi-Fi, cloud, 4G, 5G mobile telephone networks, etc.). Even the local electronic control unit 16 and the instruments (first sensor 20, video cameras 24 and/or lighting devices 26) mounted on the detection head 12 of the probe 10 can communicate with each other via a cable 32 that runs in parallel. The remote electronic control unit 18 comprises one or more mass storage devices (hard disk) and a management software which are capable of implementing the method for the deep inspection of pipes and other installations intended for the transport of fluids according to the present invention, which will be described in more detail below. The management software can be used to control the operation of the probe 10, as well as to create, save and share files containing the information and data regarding the internal physical structure of the pipe T and/or the inspection chamber C.

In particular, the management software comprises at least one first set of instructions, which is configured to convert the three-dimensional data into 3D point cloud image files and to reduce the size of the 3D image files by simplifying their respective geometric shapes. The small-sized 3D image files can therefore be subject to dynamic queries (for example, a fluid dynamics simulation) even by computer systems with low computing power. The management software also comprises at least one second set of instructions, which is configured to implement a graphical inspection protocol for inspecting the 3D image files, which can be queried and is directly compatible with technologies for the analysis and visualization of information on the territory, such as GIS (acronym for *"Geographic Information System*") and/or BIM (acronym for *"Building Information Modeling"*) technologies and/or other similar technologies.

By means of its sensor 20 consisting of an incremental scanning LIDAR sensor, the probe 10 is able to detect data regarding the internal physical structure of the pipe T and/or the inspection chamber C by generating a 3D model consisting of a three-dimensional point cloud. This three-dimensional model recreates both the structure of such installations and the surface environment near such installations.

In particular, to scan the surface environment near the buried installations, the probe 10 can also be equipped with at least one second vertical rod (not shown), with pneumatic or electric or hydraulic extension, designed to automatically lift, rotate and operate the detection head 12 in the external environment, thus creating horizontal survey segments of the area outside the manhole. This second rod is separate from the rod 14 and is designed for the coupling, on its top, of the detection head 12 with the respective instruments (first sensor 20, video cameras 24 and/or lighting devices 26).

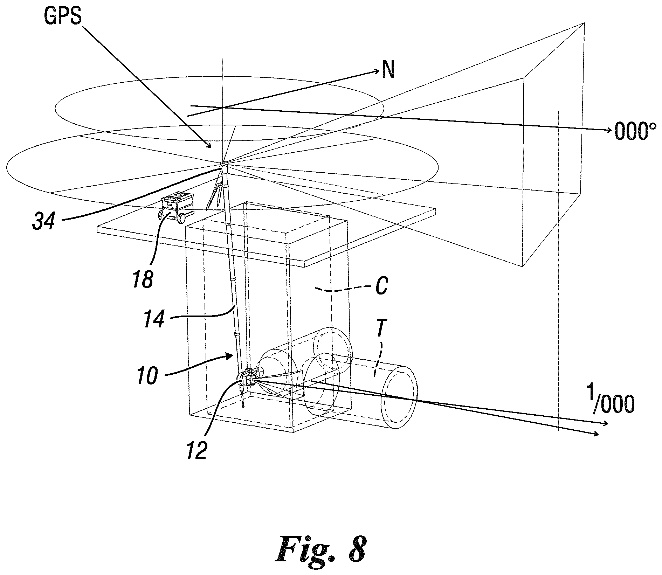

According to an alternative embodiment of the system according to the present invention, shown in Figure 8, the probe 10 may also be equipped, in addition to the detection head 12 that works in depth, with at least one second detection device 34 positioned on the proximal end of the rod 14, that is the end of the rod 14 intended to remain outside the pipe T and/or the inspection chamber C. This second detection device 34, which is simplified compared to the detection head 12, may be equipped only with a second incremental scanning LIDAR sensor and a CCD video camera, wherein this second incremental scanning LIDAR sensor and this CCD video camera are positioned perfectly in parallel, on the same plane, with the corresponding and identical underground sensors, that is to say the first sensor 20 and the video camera 24. In the case of simultaneous survey of the surface environment and the buried installations, the same group of instruments belonging to the second sensor 22 (inertial measurement sensor, compass, etc.) and all calculation processes already active for the underground detection head 12 only can be thereby used.

The operation of the probe 10, which uses a sensor 20 consisting of an incremental scanning LIDAR sensor, can be divided into the following steps. First, the detection head 12 of the probe 10 is positioned at and/or at least partially inside said pipe T and/or installation C to be analyzed. The step of scanning the pipe T and/or the installation t C is then started using the first sensor 20 consisting of at least one incremental scanning LIDAR sensor.

The incremental scanning LIDAR sensor emits a sequential plurality of laser pulses pointed to directions which are predefined and never superimposed. Each laser pulse is reflected by point-like physical portions of the pipe T and/or the installation C, such as portions of the internal walls of the pipe T and/or the inspection chamber C, including any scales. The incremental scanning LIDAR sensor detects the time taken by each laser pulse to return after reflection and measures the distance between the incremental scanning LIDAR sensor and the point-like physical portion of the pipe T and/or the installation C on which each laser pulse impacts.

The incremental scanning LIDAR sensor then proceeds to acquire the points. The incremental scanning LIDAR sensor acquires the points one by one in a predefined linear sequence, which theoretically can be infinite. Each acquired point represents the three-dimensional position of a respective point-like physical portion of the pipe T and/or the installation C. The points are recorded together with the information on the distance and the intensity of the reflected laser pulses.

Preferably, the step of acquiring the points using the incremental scanning LIDAR sensor comprises a first scanning sub-step, by means of which at least one first 3D image file is obtained, and a second scanning sub-step, by means of which at least one second 3D image file is obtained. The second 3D image file is connected by means of superimposition to the first 3D image file only in a preset area, so as to increase the point density of the three-dimensional point cloud, limited to this preset area.

Again preferably, after the step of acquiring the points via the incremental scanning LIDAR sensor, an acquisition step for acquiring one or more 2D colour images can be carried out using the video camera or the video cameras 24 which are placed on the detection head 12. These 2D images can be then connected by means of superimposition (or "matching") to the 3D image files obtained from the three-dimensional point cloud to make the portion of the pipe T and/or the installation C represented by this three-dimensional point cloud more visible. The 3D image files, based on the 2D images connected thereto, can be then processed by coloring. The colored 3D image files, which maintain a small size, can be finally saved.

The data regarding the geolocation of the pipe T and/or the installation C and/or the surface environment near the pipe T and the installation C, as well as the data regarding the positioning of the detection head 12 are then acquired by means of the second sensors 22. These data comprise, for example, the GPS interpolation, the directional orientation of the detection head 12, and then the field of view of the incremental scanning LIDAR sensor (via the compass), and the slope with respect to a horizontal plane of the geometric shapes (installations) acquired in the previous point acquisition step.

All the data coming from both the incremental scanning LIDAR sensor and the second sensors 22 are sent to the remote electronic control unit 18. The remote electronic control unit 18 provides for the creation of a point cloud, in which the points acquired by the incremental scanning LIDAR sensor are simultaneously combined by such electronic control unit 18 to form a three-dimensional point cloud which consists of a detailed representation of the physical portions of the pipe T and/or the installation C. Each point is classified to represent the geolocated position of a respective point-like physical portion of the pipe T and/or the installation C.

The remote electronic control unit 18 also provides for the processing of the three-dimensional point cloud to remove any unwanted points and/or noise. These unwanted points and/or noise, if any, are removed with special filtering and cleaning algorithms to obtain a more accurate and cleaner three-dimensional point cloud. Basically, among the numerous points acquired, in the order of several million, the filtering and cleaning algorithms can only keep in memory the points aligned to the neighbouring points within a predefined and pre-settable range, following the resulting geometric planes. The definition of the planes can also be preset, or it can be the result of a statistical evaluation by the filtering and cleaning algorithm. The incremental step allows the algorithm to continuously identify new points or areas of points "aligned" by position, stability and coherence of intensity, to the solid geometric figures being defined. In this way, the presence of moving obstacles during the survey (noise), such as steam, water or small animals, is not acquired, as instead happens in the case of the LIDAR sensors of the known type with full stroboscopic projection which must be in a state of movement with respect to the object, to obtain the same partial result, or even in the case of traditional 3D vision systems that use videoscope or digital cameras.

The resulting three-dimensional point cloud can therefore be used to generate, by the electronic control unit 18, one or more 3D image files which identify the internal physical structure of the pipe T and/or the installation C. In fact, the resulting three-dimensional point cloud can be processed and used, by means of the management software of the remote electronic control unit 18, for various applications, such as 3D mapping, navigation tracking (even autonomous), modelling of the pipe T and/or the installation C, etc. The resulting three-dimensional point cloud can also be used to generate three-dimensional models, calculate distances and heights, identify objects. The resulting three-dimensional point cloud also represents the basis of the physical data of the pipe T and/or the installation C for any more advanced processing software, such as those that perform simulations on the fluid dynamic behaviour of the substances inside the pipe T, those that perform static calculations, etc.

More generally, after the step of processing the point cloud or the step of using the resulting three-dimensional point cloud to generate the 3D image files which identify the internal physical structure of the pipe T and/or the installation C, a step of using these 3D image files can be then carried out to identify the actual and/or predictive functioning of the pipe T and/or the installation C and/or of the water network to which the pipe T and/or the installation C belong. Preferably, the step of generating the 3D image files may comprise a sub-step of automatic resizing and simplification, by the electronic control unit 18, of each 3D image file to conform it to a predefined standard.

In the event that the detection head 12 of the probe 10 is equipped with one or more video cameras 24 and/or similar devices, the data regarding the pipe T and/or the inspection chamber C can be collected by means of the combination of stereo-visual and/or structured video and/or radar and/or infrared and/or RGB vision. The data in the form of 3D images can be oriented in the space by means of the electronic compass and/or inertial measurement sensors (IMU). The absolute localization of the data is carried out by triangulating three or more points visible on the surface, or by means of the GPS receiver or antenna 22. The electronic control unit 18 implements a graphical inspection protocol for inspecting the data, the 3D images and the models which can be queried and is directly compatible with the technologies for the analysis and visualization of information on the territory, such as GIS and/or BIM technologies and/or other similar technologies. The sum of the 3D point cloud models, appropriately oriented in the space, of the pipes T, of other installations C (such as the inspection chambers) and of the surface areas allows the automatic creation of a mosaic mapping of the water network.

The compass sensors, the inclinometers to detect the inclination of the rod 14 and the gyroscopes to detect the rotation of the rod 14, in addition to the insertion of the length data of the rod 14 (which indicates the movement from a pre-set point 0 to the starting point of the survey), allow the 3D model to automatically superimpose infinite surveys of any surface point with those detected underground. The rod 14 length datum can be entered manually by the operator, or it can be acquired automatically from a specific database. Alternatively, it is possible to mount the GPS receiver (antenna) 22 directly on the rod 14. By calculating the length of the rod 14, which is normalized on the distance between the centre of the LIDAR sensor 20 and the GPS receiver (antenna) 22 (and/or a possible elevation stud placed on the proximal end of the rod 14), the information relating to the spatial coordinates XYZ and the inclination and orientation of the rod 14, of known length, will allow to obtain the alignment of the data between the surface and the subsoil.

For example, with reference to Figure 2, the measure z1, which corresponds to the length of the rod 14 up to the GPS receiver 22 elevation point (or external reference point) can be calculated and hence is known. Lacking the GPS receiver 22, the elevation Z will be mathematically obtained by automatically measuring the inclination angle of the rod 14 in all directions using the inertial measurement sensors (IMU). The compass horizon adapts to the inclination of the rod 14 and guarantees the view direction in any case. This measurement parameter is not present on any inspection instrument (probe) of the known type; however, it is essential for the projection of the three-dimensional point cloud on a GIS and/or BIM system, automatically aligned to all the other surveys, even without the use of the GPS on at least two known points.

The use on the probe 10 of one or more second sensors 22, in the form of GPS receivers, inertial measurement sensors (IMU), gyroscopes, rangefinders, compasses, etc., enables the automation in real time of the fusion of all the 3D image files into a single geolocated and oriented file of pipes T, other installations C (such as inspection chambers) and, in general, of the surrounding environment (roads, fields, etc.). The operator will enter the datum relating to the length of the rod 14 into the local electronic control unit 16 (for example a tablet) which controls the probe 10. An inclinometer placed on the rod 14 will detect the data on the inclination of this rod 14 in degrees (±90° with respect to a vertical axis of gravity). The two parameters consisting of length and inclination of the rod 14 will be sent to the remote electronic control unit 18, which will convert the two parameters to height from the bottom of the inspection chamber C and/or the bottom of the pipe T, and/or any desired plane, to a reference point 0 on the handle of the rod 14, which is also the point 0 of the spatial coordinates XYZ of the GPS receiver 22. This datum is part of the speaking data of the files of the survey carried out by the probe 10 until the inertial measurement sensor (IMU) or the compass detects a significant change in displacement (for example ±1 cm).

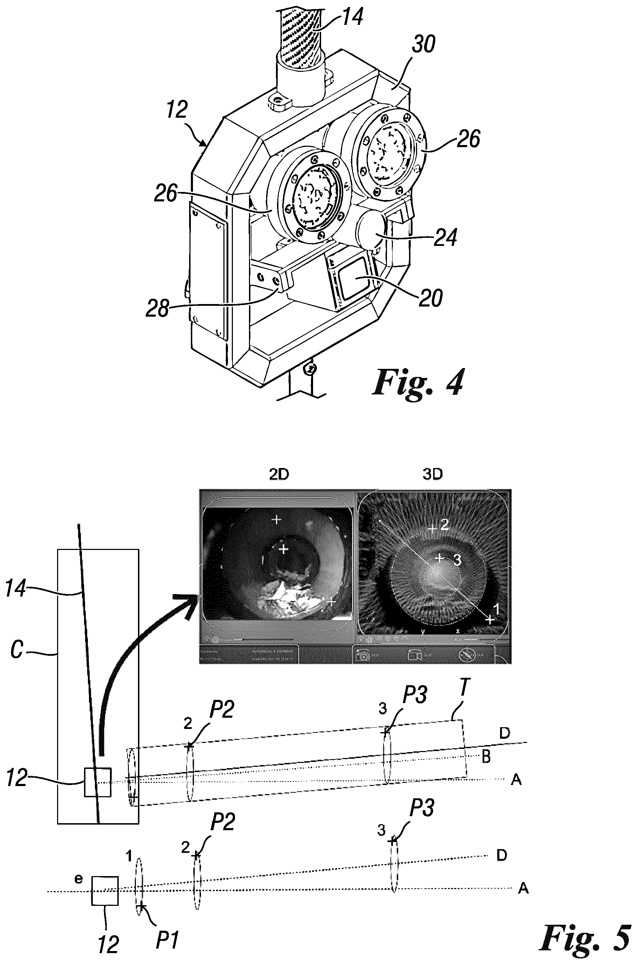

The system and method for the deep inspection of pipes and other installations intended for the transport of fluids according to the present invention can be used to obtain a plurality of information on these installations. For example, as shown in Figure 5, the slope of a pipe T can be measured starting from just two points P1 and P2 marked on the image or on the three-dimensional static model of the pipe T. In Figure 5, A indicates a horizontal or geometric horizon axis, D indicates the central axis of rotation of the pipe T, to be identified to measure the slope of the pipe T with respect to the geometric horizon axis A, and B indicates the vision centre axis of the detection head 12, which generally never coincides with either the geometric horizon axis A or the central rotation axis of the pipe T. In fact, it is assumed that it is unlikely that the vision centre axis B of the detection head 12 will be able to align the central axis of rotation of the pipe T, also due to the linear discontinuities of the pipe T. Similarly, it will be almost impossible to mark two or more points P2, P3, Pn of the three-dimensional point cloud in such a way that these two or more points P2, P3, Pn are located exactly along the central axis of rotation of the pipe T. The slope of the pipe T must therefore be calculated using an indirect approach, with two possible different procedures.

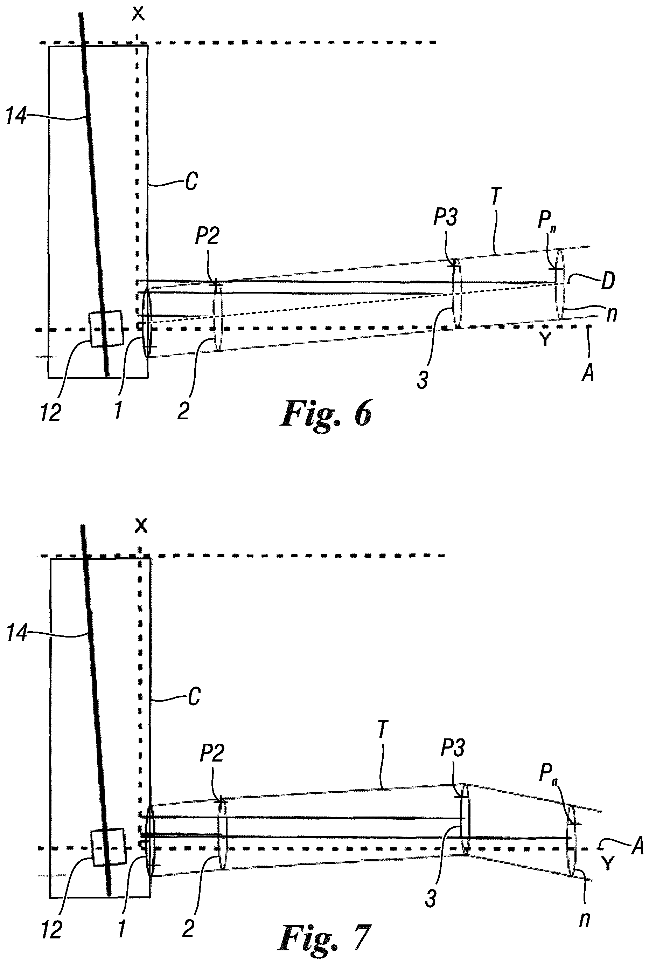

A first procedure (Figure 6) involves the manual calculation, using a pointing tool to point between the points of the cloud and a 3D image file of the LIDAR sensor 20, of a first circumference 1 on the pipe T. Alternatively, the first circumference 1 can be measured automatically by the detection head 12 of the probe 10 by reading the front edge of the pipe T. Then other points P2, P3, Pn on the surface of the pipe T are marked, choosing for example the points that are clean from scales and not subject to deformations of the circumference.

The management software of the remote electronic control unit 18 will read the points P2, P3, Pn marked by the operator and will develop the relative virtual circumferences 2, 3, n which will not be perfectly aligned, using the points with the same distance from the incremental scanning LIDAR sensor. The virtualization of the circumferences 2, 3, n will have therefore to align the central points of all the circumferences and practically make them an average geometric alignment. Localized misalignments between the pipes will be therefore excluded, providing more generalized data of the portion of the pipe T being examined.

A second procedure (Figure 7) again involves the manual calculation, using the above-mentioned tool, of a first circumference 1 on the pipe T. Alternatively, the first circumference 1 can be measured automatically by the detection head 12 of the probe 10 by reading the front edge of the pipe T. Once again, other points P2, P3, Pn on the surface of pipe T are then marked, choosing for example points that are clean from scales and not subject to evident or excessive deformations of the circumference.

The management software of the remote electronic control unit 18 will read the points P2, P3, Pn marked by the operator and will develop virtual "walls" orthogonal to the field of view of the detection head 12, onto which it will project the perfectly vertical circumference (using the IMU flat plane) in the known diameter. Alternatively, it should be left to the remote electronic control unit 18 to acquire the value of the distance between the first physical point-like portion of the pipe T and/or the installation C and the incremental scanning LIDAR sensor. When the value of the distance of the first point has been defined, only the points having the same distance will be identified and displayed, within a range to be defined, to obtain the circumference perfectly orthogonal to the detection head 12. The virtualization of the circumferences must therefore remain aligned with the real marked point. The changes in slope (for example, "slack rope") or direction of the pipe T, as well as the curves, will be therefore appreciated, providing more localized data on the portion of the pipe T being examined. This procedure would also work if the pipe T is not completely visible.

Another information, obtainable by means of the system and method for the deep inspection of pipes and other installations intended for the transport of fluids according to the present invention, may consist of the real section or circumference of the pipe T, that is to say the section or circumference including scales and/or obstructions. The real section or circumference of the pipe T is obtained by identifying all the points of the three-dimensional point cloud which have the same distance from the incremental scanning LIDAR sensor. The real section or circumference, which is deformed in the case of obstructions, may be automatically superimposed on the virtual design section (which is typically circular or of another shape, but which is in any case known). The real section or circumference and the virtual design section are superimposed for the purpose of obtaining the value of the obstructed or free section area of the pipe T. The information on the real section or circumference of the pipe T may be in cm² or as a percentage relative to the design area (useful light of the pipe T). A fluid dynamic modelling of this information will enable to measure the obstruction and its behaviour. The two areas subtraction operation can be performed automatically by the management software of the remote electronic control unit 18.

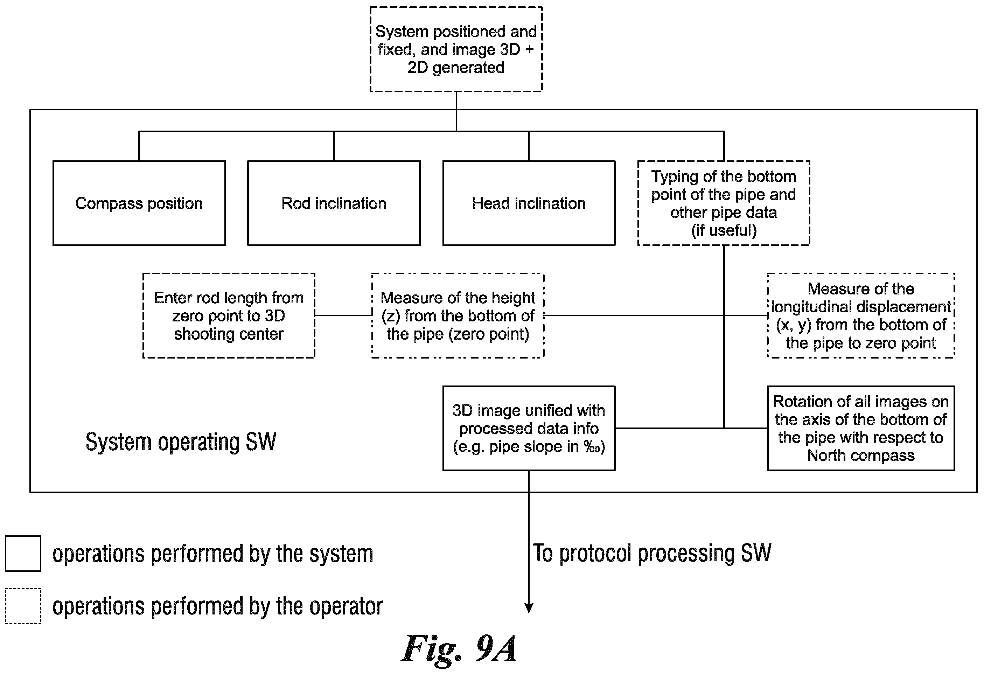

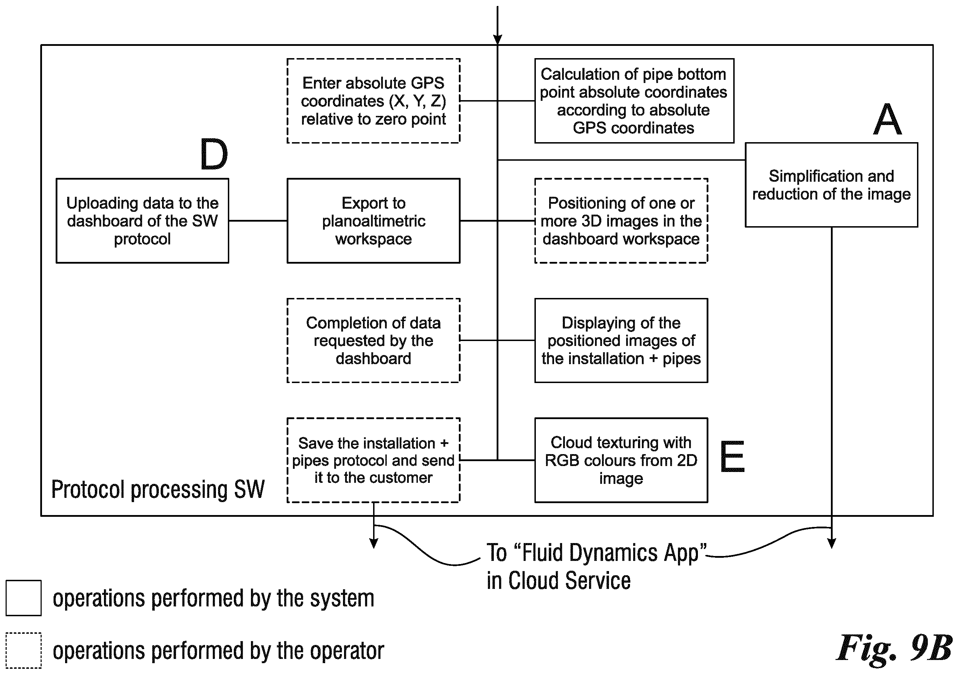

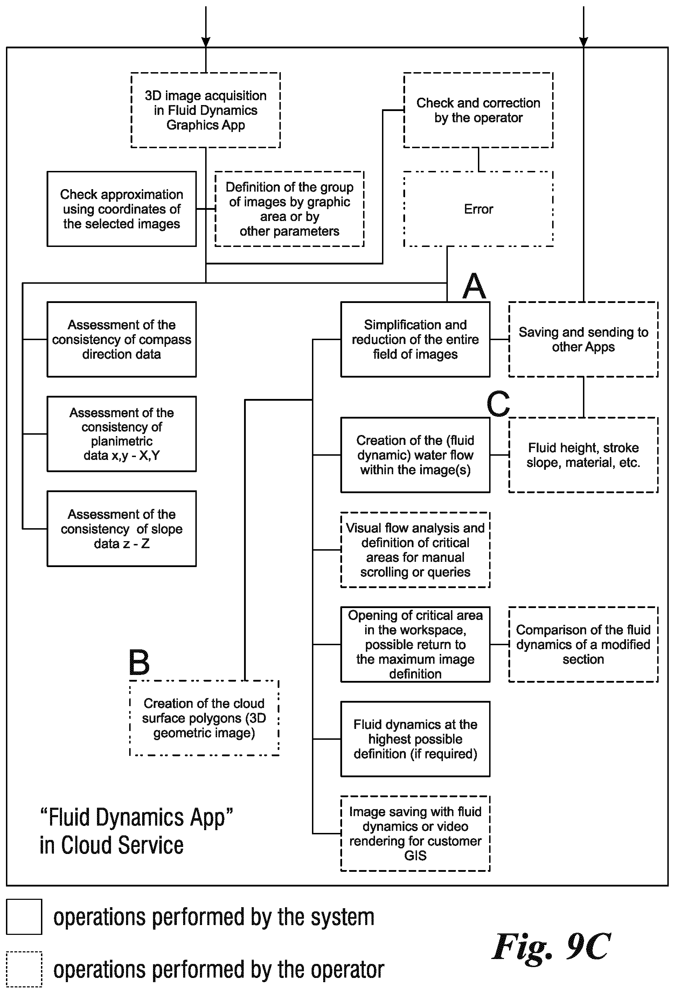

With reference to figure 9, a block diagram of a preferred embodiment of the steps for generating the simplified 3D image files of the pipe T and/or the inspection chamber C is shown, using the information obtained by means of the inertial measurement sensors (IMU), the GPS receivers 22, the video cameras 24 and measurements integrated by the operator. The image simplification step A is generated for the automatic lightening of the "raw" image directly upon arrival (from the incremental scanning LIDAR sensor) to the electronic control unit 18. A preset standard simplification and reduction level will be established. However, it will also be made possible to manually vary the reduction parameter of the image or group of images present in the work area. The operation can also be repeated or modified during the procedure for the integration/rotation of the data (in ".json" format) acquired by the electronic control unit 18 and coming from the external sensors (for example GPS receivers), by the operator and/or from third-party databases. The image simplification and data rotation software is configured as independent and autonomous.

By using, for example, the 3D computer graphics software "Houdini" for the reconstruction of 3D geometries, a first part of the data will be loaded in ".ply" format with various transformations aimed at combining the rotation of the axis X and the cm/m discrepancy. A second set of rotations is automatically extracted from the "notes.json" document to combine:
- the correct slope, that is the altimetric inclination (Z) of the point cloud with respect to the real plane;
- the direction and orientation of the section with respect to a single bottom point of the pipe T using a real compass (positioned on the surface);
- the position of the pipe T with respect to the absolute planimetric coordinates XY.

Other information which can be inserted into the system can be, for example:
- the actual material of the pipe T (sclerometry) and the simulation of fluid behaviour with new coating or replacement material;
- the flow capacity of the pipelines or of the individual selected sections and the simulation of the fluid behaviour following the predictive modification of the criticalities in the event of maintenance;
- the reception capacity of the downstream, upstream and intermediate chambers and the simulation of the fluid behaviour following the modification in the event of predictive maintenance;
- the inlet direction and the estimated flow rate of the connections, predictively estimable up to 100% of the diameter and the slope estimated from the ground level (flood).

The various point clouds are then joined and automatically optimized, to then proceed to the creation of the actual geometry with a subsequent, again automatic, optimization. Then, after use, an automatic texturing process follows, to reassign the initial image and "glue" it to the mesh.

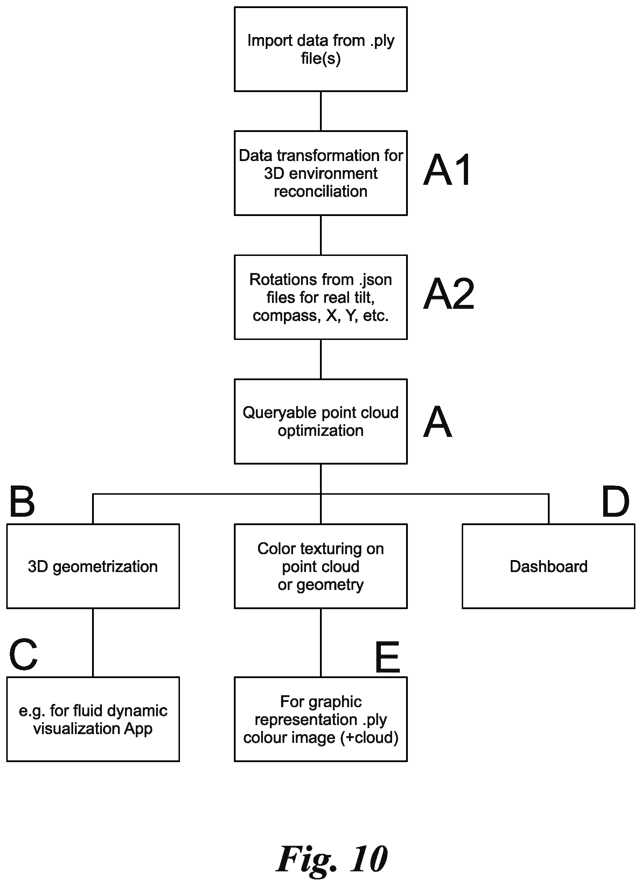

Figure 10 shows in detail the image processing scheme of step A. In sub-step A1 the entire point system is scaled to .01x (cm/m ratio). In sub-step A2 the ".json" file contains information on the absolute angles, for example:
*"roll_angle_deg":* - 0.7525634765625.

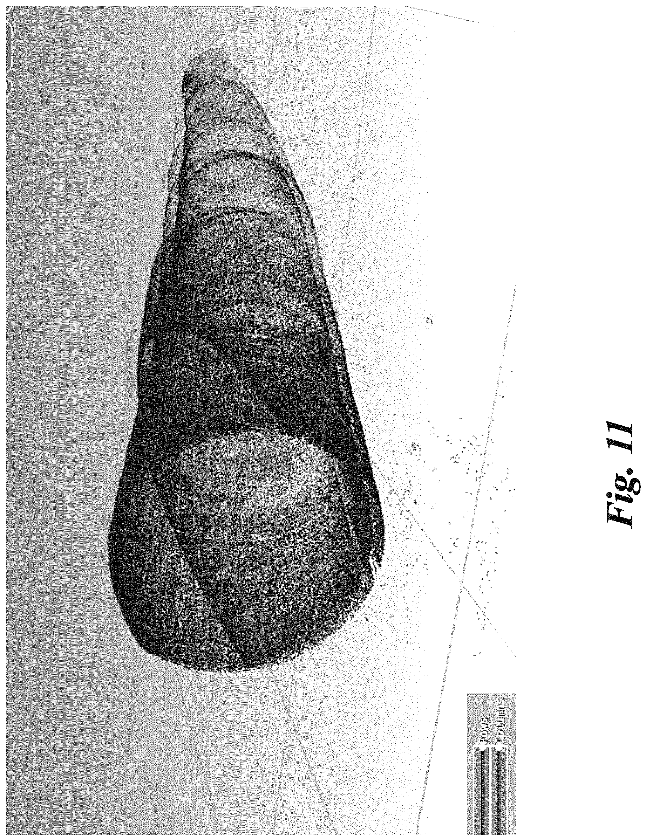

This is the "left/right" tilt angle of the incremental scanning LIDAR sensor's shooting point with respect to the observer. This datum is manually or automatically inserted into a rotation node (which is preferably coinciding with the bottom pipe elevation point assigned to the pipe during the survey, or in post-processing, or automatically) in a dedicated 3D computer graphics program (for example Houdini) to ensure the correct rotation of the pipe T with respect to the real world. An example of a scaled and simplified image of a pipe T is shown in Figure 11.

Step B relates to the creation of the surfaces. The surfaces are created automatically, by connecting the points of the optimized cloud by means of a specific software (for example Houdini) to recreate in a 3D environment a geometry without holes, representative of the original scan. The cloud image of points suspended in the void is then transformed into an image of surfaces which have a real location XYZ + compass + slope (with respect to even a single survey point) within absolute cartographic environments (GIS, M.Station, etc.). With some software (for example Houdini) the surfaces created automatically, by joining the points of the cloud, behave like real 3D models even if they are not. This avoids the use of very powerful mathematical processes, which significantly increase the weight of the final model to work on.

Step C relates to the fluid dynamics visualization. The electronic control unit 18 may be equipped with fluid dynamics animation software. This software requires that a series of information be automatically and/or manually loaded by the system, by other interconnected databases, or by the operator. Using the same 3D computer graphics program (for example Houdini), the fluid flowing inside the pipe T is also visualized in 3D format, with the real dynamic behaviour in contact with the surfaces of the pipe T. The fluid dynamics animation software is designed to view and query the realistic ability to convey the variable flows inside the pipe T, with the aim of optimizing the structural configuration of the pipelines to mitigate obstructions, construction defects, design errors and serious injuries.

For example, by partially filling the model of the pipe T (generated in the previously described step B) with a fluid in which the surface tension and the Reynolds number closely approximate the water behaviour, it is possible to let this fluid flow inside the pipe T, with a simulation of gravity and slope to identify any leaks, obstructions or anomalous flow behaviour. The filling and thrust from downstream data will be acquired by adding the relative data of the upstream section and the downstream in-line and in-chamber connections. The interconnection with the active monitoring and prediction programs of rainfall events (which have already acquired the cartographic data of the rainfall areas) will provide the flow rate data (mm/m²), for example in m³/minute. The superimposition of the rainfall areas with the collection areas of the sewer networks (for example number and position of the connections to the drains) will allow the automation of the quantity of water entering along the observed section. Added to this is the minimum load datum of sewage, normally recorded by the network manager. Another implementable datum is the presence of infiltrations which determine the difference in flow between the upstream and downstream chambers, in the absence of rainwater discharges from the surface (which datum is already available in the databases of the "parasitic water research").

Step D finally relates to the human-machine interface mode via a display dashboard installed on the electronic control unit 18. For example, via this display dashboard, the data in the ".json", ".ply" and ".jpeg" formats coming from the system, the data XYZ coming from the GPS receivers 22 (whether integrated or not in the system), the data entered by the operator, or automatically proposed as a repetition of the previous section of the route, and any data coming from other software and/or sensors are loaded.

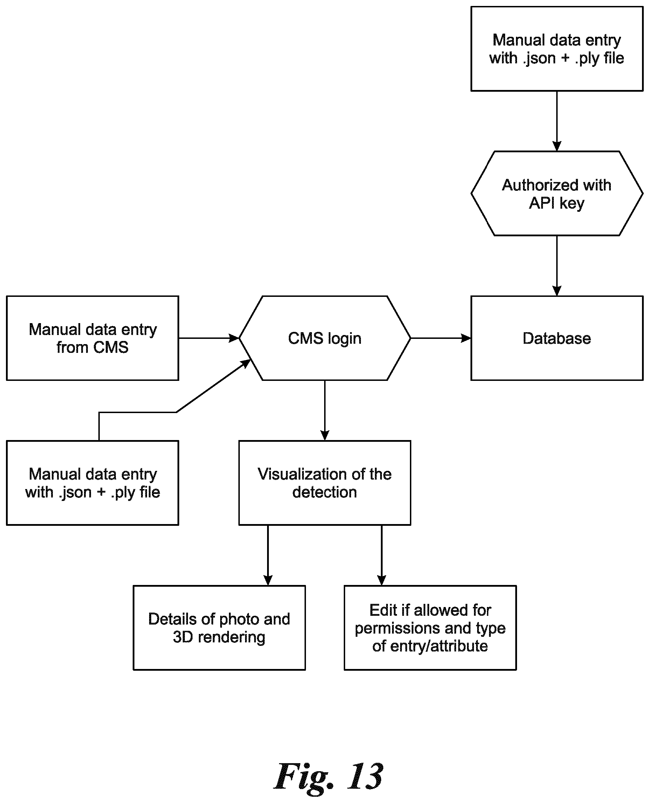

Figure 13 is a block diagram showing the steps of collecting, processing and saving the data coming from the system and the operator on-site. The acronym CMS stands for *"Content Management System",* that is to say the content management system installed in the electronic control unit 18. The peculiarity of this data flow consists in the automatic resizing (up to 5 MB) and simplification, by the electronic control unit 18, of each 3D image file, maintaining a quality and a point density sufficient for subsequent "light" processing in cloud, such as fluid dynamics.

It has thus been seen that the system and method for the deep inspection of pipes and other installations intended for the transport of fluids according to the present invention achieve the purposes previously highlighted, obtaining in particular the following advantages:
- the system is faster in data acquisition both compared to the systems equipped with known LIDAR sensors and compared to the systems equipped with traditional CCD shooting optics;
- the system is able to obtain more accurate data compared to the systems equipped with known LIDAR sensors;
- progressive increase in real density of the three-dimensional point cloud, because the incremental scanning LIDAR sensor never passes over another point already detected;
- unlimited density of useful points (depending on the size of the file that can be processed);
- insensitivity to the "noise" of fluids or vapours moving quickly in the installation during scanning;
- ability to resize and simplify the original 3D image file into the same much lighter 3D image file;
- ability to generate the geometrization of 3D point cloud images into 3D surface images;
- ability to generate, from the resized image, a dynamic and queryable process of fluid dynamics of the pipe, independent of known mathematical design programs (which require dense and therefore very heavy images), and complex specialized processes;
- ability to interface with the operator, during the generation process, via a computer dashboard capable of generating a single queryable file directly in GIS and/or BIM compatible format;
- ability to connect in a single simplified and light 3D image file, by means of the same method, external environmental images of the chamber and the pipe to which the system capabilities (for example the fluid dynamics of rainwater) can be applied;
- ability to acquire 3D details of the pipe (protruding connections, breakages, hard obstructions, etc.) in a digital format immediately transferable in ".roi", ".mcap", etc. format to automatically generate the autonomous work programming of the mechatronic, milling or manipulating equipment for pipes, which is nowadays servo-controlled only by operators using joysticks and CCD cameras;
- ability to operate in total darkness or strong daytime light;
- mechanical robustness;
- waterproofing against immersion.

The system and method for the deep inspection of pipes and other installations intended for the transport of fluids according to the present invention thus conceived are however susceptible of numerous modifications and variations, all of which falling within the scope of the same inventive concept; furthermore, all the details can be replaced by technically equivalent elements. In practice, the materials used, as well as the shapes and dimensions, may be any according to the technical requirements. The scope of protection of the invention is therefore defined by the attached claims.

## Claims

1. A system for the deep inspection of a pipe (T) and/or another installation (C) intended for the transport of fluids, the system comprising at least one probe (10) which in turn comprises:
- at least one detection head (12), which is designed to be positioned at and/or at least partially inside said pipe (T) and/or installation (C), and is provided with at least one first sensor (20) for the collection of the data regarding the internal physical structure of said pipe (T) and/or installation (C),
- at least one rigid or flexible extendable rod (14), on a distal end of which said at least one detection head (12) is positioned,
- at least one local electronic control unit (16), which is positioned on a proximal end of said at least one rod (14) and is provided with at least one second sensor (22) for the collection of the data regarding the geolocation of said pipe (T) and/or installation (C) and/or the surface environment near said pipe (T) and said installation (C), wherein said local electronic control unit (16) is configured to send command instructions to said at least one first sensor (20) and to receive data from said at least one first sensor (20),
the system further comprising at least one remote electronic control unit (18), which is capable of communicating with said at least one local electronic control unit (16), via a predefined connection mode, and is capable of receiving, storing and processing the data coming from said at least one first sensor (20) and said at least one second sensor (22), the system being **characterized in that** said at least one first sensor (20) consists of at least one incremental scanning LIDAR sensor, wherein said incremental scanning LIDAR sensor is configured to emit a sequential plurality of laser pulses, pointed to directions which are predefined and never superimposed, and to incrementally acquire three-dimensional data, in the form of points, regarding the internal physical structure of the pipe (T) and/or the installation (C), wherein each point is acquired one at a time, in a predefined linear sequence, and represents the three-dimensional position of a respective point-like physical portion of said pipe (T) and/or said installation (C), wherein said remote electronic control unit (18) comprises one or more mass storage devices and a management software which are capable of implementing a method for the deep inspection of a pipe (T) and/or another installation (C) intended for the transport of fluids, and wherein said management software comprises:
- at least one first set of instructions, which is configured to convert said three-dimensional data into 3D point cloud image files and to reduce the size of said 3D image files by simplifying their respective geometric shapes; and
- at least one second set of instructions, which is configured to implement a graphical inspection protocol for inspecting said 3D image files, which can be queried and is directly compatible with technologies for the analysis and visualization of information on the territory.

2. The system according to claim 1, wherein said at least one detection head (12) comprises one or more video cameras (24) and/or one or more lighting devices (26).

3. The system according to claim 2, wherein said at least one first sensor (20), said one or more video cameras (24) and/or said one or more lighting devices (26) are fitted on a structure (28) which is movable, rotating and/or tilting relative to a fixed frame (30) of said detection head (12).

4. The system according to claim 3, wherein said detection head (12) is equipped with motorized means for the relative movement of said structure (28) which is movable relative to said fixed frame (30), wherein said motorized means preferably consist of stepper motors.

5. The system according to any claims 1 to 4, wherein said at least one second sensor (22) comprises:
- one or more inertial measurement sensors;
- one or more GPS receivers;
- one or more gyroscopes;
- one or more inclinometers;
- one or more compasses;
- one or more distance sensors; and/or
- one or more elevation sensors.

6. The system according to any claims 1 to 5, wherein said incremental scanning LIDAR sensor is a conical or pyramidal incremental scanning LIDAR sensor, having a settable and/or selectable definition, so that it is possible to preset two survey areas, that is to say a general survey area, from which a first 3D image file with uniform density of the points of the point cloud can be obtained, and a smaller survey area, to superimpose a second 3D image file concentrated in the desired survey area on the first 3D image file.

7. The system according to any claims 1 to 6, wherein said local electronic control unit (16) comprises a display for viewing and controlling the detection head (12).

8. The system according to any claims 1 to 7, wherein said probe (10) is equipped with at least one second vertical rod, with hydraulic or electric or pneumatic extension, to lift, rotate and operate said detection head (12) in the external environment, wherein said second rod is separated from the rod (14) and is designed for the coupling, on its top, of the detection head (12).

9. The system according to any claims 1 to 8, wherein said probe (10) is provided, in addition to the detection head (12) which operates at depth, with at least one second detection device (34) positioned on the proximal end of the rod (14), wherein said second detection device (34) is only equipped with a second incremental scanning LIDAR sensor and a video camera, and wherein said second incremental scanning LIDAR sensor and said video camera are positioned perfectly in parallel, on the same plane, with corresponding sensors of said detection head (12) in such a way that, in the case of simultaneous survey of the surface environment and of said pipe (T) and/or installation (C), the same group of instruments belonging to the second sensor 22 and all calculation processes already active for the underground detection head (12) can be thereby used.

10. A method for the deep inspection of a pipe (T) and/or another installation (C) intended for the transport of fluids by using a system according to any preceding claims, the method comprising the following steps:
- positioning the detection head (12) of said probe (10) at and/or at least partially inside said pipe (T) and/or installation (C);
- scanning said pipe (T) and/or said installation (C) by means of said at least one first sensor (20) consisting of at least one incremental scanning LIDAR sensor, wherein said incremental scanning LIDAR sensor emits a sequential plurality of laser pulses pointed to directions which are predefined and never superimposed, wherein each laser pulse is reflected by point-like physical portions of said pipe (T) and/or said installation (C), wherein said incremental scanning LIDAR sensor detects the time taken by each laser pulse to return after reflection, and wherein said incremental scanning LIDAR sensor measures the distance between said incremental scanning LIDAR sensor and the point-like physical portion of said pipe (T) and/or said installation (C) on which each laser pulse impacts;
- acquiring the points via the incremental scanning LIDAR sensor, wherein said incremental scanning LIDAR sensor acquires the points one by one in a predefined linear sequence, wherein each acquired point represents the three-dimensional position of a respective point-like physical portion of said pipe (T) and/or said installation (C), and wherein the points are recorded together with the information on the distance and the intensity of the reflected laser pulses;
- acquiring, via said at least one second sensor (22), the data regarding the geolocation of said pipe (T) and/or installation (C) and/or the surface environment near said pipe (T) and said installation (C), as well as the data regarding the positioning of said detection head (12);
- receiving, by said at least one remote electronic control unit (18), all the data coming from said at least one first sensor (20) and said at least one second sensor (22);
- creating a point cloud by said at least one electronic control unit (18), wherein the points acquired by the incremental scanning LIDAR sensor are simultaneously combined by said at least one electronic control unit (18) to form a three-dimensional point cloud which consists of a detailed representation of the physical portions of said pipe (T) and/or said installation (C), wherein each point is classified to represent the geolocated position of a respective point-like physical portion of said pipe (T) and/or said installation (C);
- processing the three-dimensional point cloud by said at least one electronic control unit (18), wherein any unwanted points and/or noise are removed with filtering and cleaning algorithms to obtain a more accurate and cleaner resulting three-dimensional point cloud; and
- using the resulting three-dimensional point cloud to generate, by the electronic control unit 18, one or more 3D image files which identify the internal physical structure of said pipe (T) and/or said installation (C); and
- implementing, said at least one electronic control unit (18), a graphical inspection protocol for inspecting said 3D image files, which can be queried and is directly compatible with technologies for the analysis and visualization of information on the territory.

11. The method according to claim 10, wherein said step of acquiring the points via the incremental scanning LIDAR sensor comprises a first scanning sub-step, by means of which at least one first 3D image file can be obtained, and a second scanning sub-step, by means of which at least one second 3D image file can be obtained, wherein said at least one second 3D image file is connected by superimposition to said at least one first 3D image file only in a preset area, so as to increase the point density of the three-dimensional point cloud, limited to said preset area.

12. The method according to claim 10 or 11, wherein after said step of acquiring the points via the incremental scanning LIDAR sensor, an acquisition step for acquiring one or more 2D colour images is carried out using one or more video cameras (24) placed on said at least one detection head (12), wherein said one or more 2D images are connected by superimposition on the 3D image files obtained from the three-dimensional point cloud to make the portion of said pipe (T) and/or installation (C) represented by said three-dimensional point cloud more visible.

13. The method according to claim 12, further comprising the following sub-steps:
- processing, by colouring, the 3D image files based on the 2D images connected to said 3D image files;
- saving the processed 3D image files.

14. The method according to any claims 10 to 13, wherein, after said step of processing the point cloud or said step of using the resulting three-dimensional point cloud to generate the 3D image files which identify the internal physical structure of said pipe (T) and/or said installation (C), a step of using said 3D image files to identify the actual and/or predictive functioning of said pipe (T) and/or installation (C) and/or the water network to which said pipe (T) and/or installation (C) belong is carried out.

15. The method according to any claims 10 to 14, wherein said step of generating one or more 3D image files comprises a sub-step of automatic resizing and simplification, by said at least one electronic control unit (18), of each 3D image file to conform it to a predefined standard.
